(19) Europäisches Patentamt
European Patent Office
Office européen des brevets

(11) EP 4 338 913 A1

(12) **EUROPEAN PATENT APPLICATION**
published in accordance with Art. 153(4) EPC

(43) Date of publication:
20.03.2024 Bulletin 2024/12

(21) Application number: 23780772.2

(22) Date of filing: 29.03.2023

(51) International Patent Classification (IPC):
B29B 7/18 (2006.01)     B29B 7/20 (2006.01)
B29B 7/28 (2006.01)     B01F 27/1144 (2022.01)
B01F 27/703 (2022.01)     B01F 27/721 (2022.01)
B01F 35/212 (2022.01)     B01F 35/213 (2022.01)
B01F 35/214 (2022.01)     B01F 35/222 (2022.01)
B01F 35/33 (2022.01)

(52) Cooperative Patent Classification (CPC):
B01F 27/1144; B01F 27/703; B01F 27/721;
B01F 35/212; B01F 35/213; B01F 35/214;
B01F 35/222; B01F 35/33; B29B 7/18; B29B 7/20;
B29B 7/28

(86) International application number:
PCT/JP2023/012990

(87) International publication number:
WO 2023/190764 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.03.2022  JP 2022057747
30.03.2022  JP 2022057748
25.11.2022  JP 2022188782

(71) Applicant: Suzuka Engineering Co., Ltd
Yokkaichi city, Mie 510-0951 (JP)

(72) Inventor: YADA TATSUO
Yokkaichi-shi, Mie 510-0951 (JP)

(74) Representative: Marks & Clerk LLP
15 Fetter Lane
London EC4A 1BW (GB)

(54) **KNEADING STATE EVALUATION METHOD, KNEADER, AND KNEADING ADJUSTMENT METHOD**

(57) Provided are a method for evaluating a kneading state in which a change in physical properties of a kneading material can be grasped in an internal mixer including tangential rotors, a kneader, and a kneading adjustment method capable of obtaining desired kneading characteristics. The method for evaluating a kneading state is an evaluation method in an internal mixer 1 including a pair of tangential rotors connected by a pair of gears and rotated at different speeds by driving of an electric motor, in which the gears have the numbers of teeth of different integers that are not prime to each other, and spectrum analysis is performed on the basis of a kneading parameter detected at the time of kneading by sensors 10 and 11 included in the internal mixer 1 to evaluate a change in a predetermined frequency component.

Fig.1

**Description**

TECHNICAL FIELD

The present invention relates to a method for evaluating a kneading state when a kneading material such as rubber, plastic, or ceramics is kneaded by a kneader, a kneader, and a kneading adjustment method.

BACKGROUND ART

Conventionally, an internal mixer has been known as an apparatus for mixing various kneading materials (see, for example, Patent Document 1). In this internal mixer, after a kneading material is put into a kneading chamber, two kneading rotors rotate to mix the kneading material. Generally, as kneading rotors of an internal mixer, intermeshing rotors in which two kneading rotors rotate so as to mesh with each other and tangential (non-meshing) rotors are known.

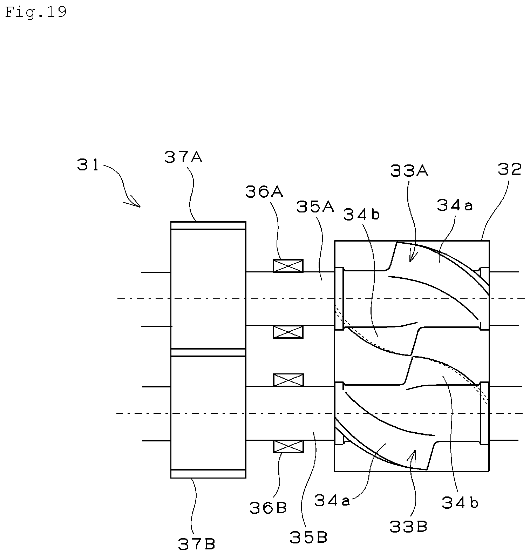

FIG. 19 illustrates an example of an internal mixer equipped with tangential rotors. FIG. 19 is a schematic plan view of the mixing and kneading machine (hereinafter referred to as kneader). In FIG. 19, an internal mixer 31 includes a kneading chamber 32, two kneading rotors 33A and 33B provided in parallel in the kneading chamber 32, bearings 36A and 36B that rotatably support rotor shafts 35A and 35B of the kneading rotors 33A and 33B, and a pair of gears 37A and 37B. Spiral blades 34a and 34b are formed on the outer peripheries of the kneading rotors 33A and 33B, respectively.
In FIG. 19, one rotor shaft (for example, 35A) among the rotor shafts 35A and 35B is connected to a drive means such as a motor, and the other rotor shaft (for example, 35B) is connected to the one rotor shaft via the pair of gears 37A and 37B. Then, the rotor shaft 35A is rotationally driven by the drive means, so that the kneading rotors 33A and 33B rotate to mix a kneading material. In this case, the kneading rotor 33A connected to the drive means corresponds to the drive rotor, and the kneading rotor 33B corresponds to the driven rotor.
In the internal mixer including tangential rotors as illustrated in FIG. 19, generally, a speed difference of about 15% to 25% is usually provided between the drive rotor and the driven rotor by making gear ratios in the pair of gears different. By rotating these kneading rotors at different speeds, the phase between the drive rotor and the driven rotor is changed, and it is thought that kneading is uniformly performed.
On the other hand, in the internal mixer with intermeshing rotors, the gear ratio of a pair of gears is set to 1:1 from the characteristics of the kneading rotors. In this case, the phase between the pair of kneading rotors is strictly managed in order to avoid contact between the kneading rotors and to make the processing speed (shear rate) acting on the kneading material constant.

PRIOR ART DOCUMENTS

PATENT DOCUMENT

Patent Document 1: JP H09-313916 A
Patent Document 2: WO 2021/033390 A

SUMMARY OF THE INVENTION

PROBLEMS TO BE SOLVED BY THE INVENTION

Conventionally, in an internal mixer including tangential rotors, the end of kneading is performed using (1) kneading time, (2) temperature of a kneading material, (3) power consumption, and combinations thereof as indices. For example, the temperature of the kneading material rises as the kneading progresses. In a case where the temperature of the kneading material is used as an index, the end timing of kneading is determined, for example, by the fact that the temperature has reached a predetermined temperature. However, the index used conventionally mainly indicates an energy input amount during kneading, and it is difficult to realize a change in physical properties of the kneading material during kneading.
Meanwhile, in recent years, as a determination system for determining the state of an object to be stirred, there has been developed a system including: an acquisition unit that acquires waveform data indicating a waveform related to a current supplied to a drive device of a stirrer including a mechanism unit that stirs the object to be stirred and the drive device that drives the mechanism unit; and a determiner that determines a state of the object to be stirred on the basis of a change obtained from the waveform data and caused by a component in a specific direction of a force applied to the drive device (see Patent Document 2). In Patent Document 2, the current supplied to the drive device is an alternating current having a reference frequency, and in this technique, waveform data of the alternating current, that is, an instantaneous value of the alternating current is used. Specifically, an instantaneous value waveform of an alternating current that is a sine wave is input, and the state of the object to be stirred is determined by focusing on the output reference frequency component and other components. As described above, there is a demand for a new method for grasping a change in physical properties of a kneading material during kneading.

On the other hand, as described above, in the internal mixer equipped with tangential rotors, the pair of kneading rotors is generally rotated at different speeds in order to perform kneading uniformly while changing the phase. In this case, it is important that the phase changes at any time between the pair of kneading rotors in order to perform kneading evenly. However, there is no known prior art in which the pair of kneading rotors is rotated while focusing on the phase (in particular, a specific phase) during rotation, and there is no known technique of adjusting kneading characteristics (viscosity of kneading material, torque during kneading, and the like) due to the specific phase or the like.

The present invention has been made in view of such circumstances, and an object of the present invention is to provide a method for evaluating a kneading state in which a change in physical properties of a kneading material can be realized in an internal mixer equipped with tangential rotors, a kneader, and a kneading adjustment method capable of obtaining desired kneading characteristics.

MEANS FOR SOLVING THE PROBLEM

A method for evaluating a kneading state according to the present invention is a method for evaluating a kneading state in a kneader equipped with a pair of tangential rotors connected by a pair of gears and rotated at different speeds by driving of an electric motor, in which the gears have the numbers of teeth of different integers that are not prime to each other, the evaluation method is a method for performing spectrum analysis on the basis of a kneading parameter detected at the time of kneading by a sensor equipped in the kneader and evaluating a change in a predetermined frequency component, and the kneading parameter is at least any one selected from a temperature of a kneading material, an effective value of an alternating current supplied to the electric motor, a direct current value supplied to the electric motor, a power value consumed by the electric motor, a load ratio of the electric motor, an output torque of the electric motor, an acoustic wave generated from the kneader, and vibration generated from the kneader. The evaluation method includes an aspect in which the kneading parameter is monitored in real time in addition to an aspect in which the recorded kneading parameter is analyzed and evaluated later.

In a case where the numbers of teeth in the pair of gears are m and n (m < n), the number of teeth m and the number of teeth n have a greatest common divisor k larger than 1, and the rotation speed of a rotor connected to the gear having the number of teeth m is r (unit: min$^{-1}$), spectrum analysis is performed on the basis of the kneading parameter, and changes in frequency components of f = (r·k)/60n (unit: Hz) and integer multiples or integer fractions of f are evaluated.

The evaluation method is a method of processing and spectrally analyzing the kneading parameter, and the method includes spectrally analyzing a deviation between a moving average value and a current value of the kneading parameter.

The kneader is a kneader that kneads a non-Newtonian fluid. Specific examples of the non-Newtonian fluid include rubber, plastic, ceramics, silicone, and a chewing gum composition.

The kneader according to the present invention is a kneader including a pair of tangential rotors connected by a pair of gears and rotated at different speeds by driving of an electric motor, in which the gears have the numbers of teeth of different integers that are not prime to each other, the kneader further including an analyzer that performs spectrum analysis on the basis of a kneading parameter detected at the time of kneading by sensors equipped in the kneader, and the kneading parameters are at least any one selected from a temperature of a kneading material, an effective value of an alternating current supplied to the electric motor, a direct current value supplied to the electric motor, a power value consumed by the electric motor, a load ratio of the electric motor, an output torque of the electric motor, an acoustic wave generated from the kneader, and vibration generated from the kneader.

The kneader includes a determiner that determines an end timing of kneading in the kneader on the basis of changes in predetermined frequency components obtained by the analyzer.

A kneading adjustment method according to the present invention is a kneading adjustment method in a kneader including a pair of tangential rotors connected by a pair of gears and rotated at different speeds, the kneading adjustment method including: setting the numbers of teeth of the gears to a combination of the numbers of teeth of different integers that are not prime to each other among a plurality of combinations of the numbers of teeth; thereafter selecting a specific meshing pattern from among a plurality of meshing patterns of the gears and meshing the gears with the specific meshing pattern to set an initial phase of the tangential rotors, the specific meshing pattern being selected on the basis of rotation phase patterns of the tangential rotors derived from a state where the gears are meshed by the plurality of meshing patterns.

The tangential rotors each include a plurality of blades.

The specific meshing pattern is selected on the basis of the closest approach distance between the blades of the tangential rotors obtained from the rotation phase patterns.

In the gears, the number of teeth of a gear having a larger number of teeth is larger than the number of teeth of the other gear by 10% to 50%.

EFFECT OF THE INVENTION

The method for evaluating a kneading state according to the present invention is a method for evaluating a kneading state in a kneader including a pair of gears having the numbers of teeth of different integers that are not prime to each other. By setting the number of teeth in the pair of gears to different integers that are not prime to each other, the frequency at which the pair of rotors have the same phase increases, and in this configuration, a spectrum characteristic of a predetermined frequency component can be satisfactorily detected by spectrum analysis of a kneading parameter (for example, the temperature of the kneading material, the effective value of the alternating current supplied to the electric motor, the direct current value supplied to the electric motor, the power value consumed by the electric motor, the load ratio of the electric motor, the output torque of the electric motor, the acoustic wave generated from the kneader, and the vibration generated from the kneader), and changes in physical properties of the kneading material can be realized by evaluating the change in the spectrum.

In the above evaluation method, the changes in the frequency component of $f = (r \cdot k)/60n$ (unit: Hz) and an integer multiple or an integer fraction of $f$ is evaluated, so that the change in the physical properties of the kneading material can be more easily realized.

As explained as a method of setting the number of teeth of the gears to a combination of the numbers of teeth of different integers that are not prime to each other among a plurality of combinations of the numbers of teeth, thereafter selecting a specific meshing pattern from among a plurality of meshing patterns of the gears and meshing the gears with the specific meshing pattern to set each initial phase of the tangential rotors, the kneading adjustment method according to the present invention is characterized particularly in combining (1) (step of) setting the number of teeth of a pair of gears to a predetermined relationship and (2) (step of) selecting a specific meshing pattern on the basis of each rotation phase pattern of tangential rotors from a plurality of options of a meshing pattern generated thereby. Thus, the shape of the kneading space in the kneader can be changed without changing the shape of the tangential rotors. As a result, kneading can be performed in consideration of a specific phase (for example, the phase in which the blades of the tangential rotors come closest to each other) during rotation, and desired kneading characteristics can be obtained.

In addition, since a specific meshing pattern is selected on the basis of the closest approach distance between the blades of the tangential rotors obtained from the rotation phase patterns, for example, a rotation phase pattern in which each rotation torque of the tangential rotors are excessively generated can be avoided, and desired kneading characteristics can be considerably obtained.

BRIEF DESCRIPTION OF THE DRAWINGS

FIG. 1 is an explanatory view illustrating an overall schematic configuration of a kneader according to the present invention.

FIG. 2 is a diagram for explaining driving of kneading rotors of the kneader in FIG. 1.

FIG. 3 is a diagram illustrating an example of the number of teeth of a pair of gears.

FIG. 4 is a graph illustrating temporal variation of each parameter in a test example.

FIG. 5 is a diagram illustrating a result of fast Fourier transform (FFT) of a power value in FIG. 4.

FIG. 6 is a diagram illustrating a result of FFT after processing the power value in FIG. 4.

FIG. 7 is a diagram illustrating a result of FFT of temperature in FIG. 4.

FIG. 8 is a diagram illustrating a result of FFT after processing the temperature in FIG. 4.

FIG. 9 is a flowchart for explaining processing executed by a controller.

FIG. 10 is a schematic cross-sectional view of a kneading chamber as an example of a kneader used in a kneading adjustment method of the present invention.

FIG. 11 is a diagram for explaining driving of the kneading rotors of the kneader in FIG. 10.

FIG. 12 is a diagram illustrating an example of a gear in the kneader.

FIG. 13 is a schematic view illustrating a dimensional relationship between the pair of gears.

FIG. 14 is a schematic view illustrating a meshing state of the pair of gears in a matrix.

FIG. 15 is a schematic view of steps illustrating an example of a kneading adjustment method of the present invention.

FIG. 16 is a diagram illustrating a rotation phase pattern in a certain meshing pattern.

FIG. 17 is a diagram illustrating a rotation phase pattern in a certain meshing pattern.

FIG. 18 is a diagram illustrating an initial phase of kneading rotors corresponding to each meshing pattern.

FIG. 19 is a diagram for explaining driving of kneading rotors of a conventional kneader.

## MODE FOR CARRYING OUT THE INVENTION

First, a method for evaluating a kneading state and a kneader according to the present invention will be described below.

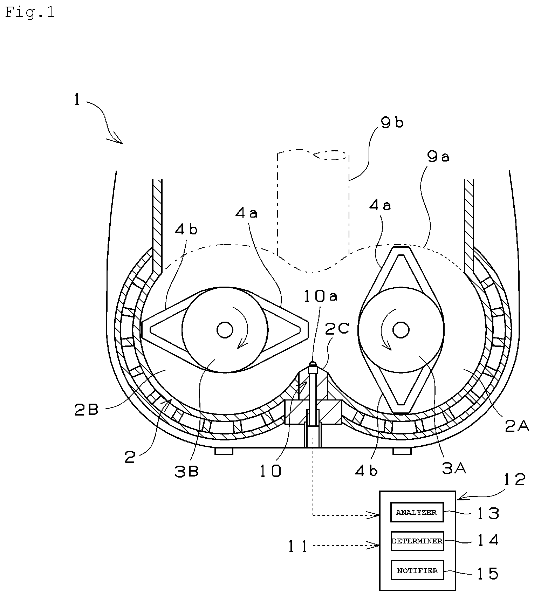

The kneader used in the method for evaluating a kneaded state according to the present invention is an internal mixer for kneading a non-Newtonian fluid including rubber, plastic, or the like. FIG. 1 is an explanatory view illustrating an overall schematic configuration of the kneader according to the present invention, and is a schematic cross-sectional view mainly of a kneading chamber located at a lower end of the kneader.

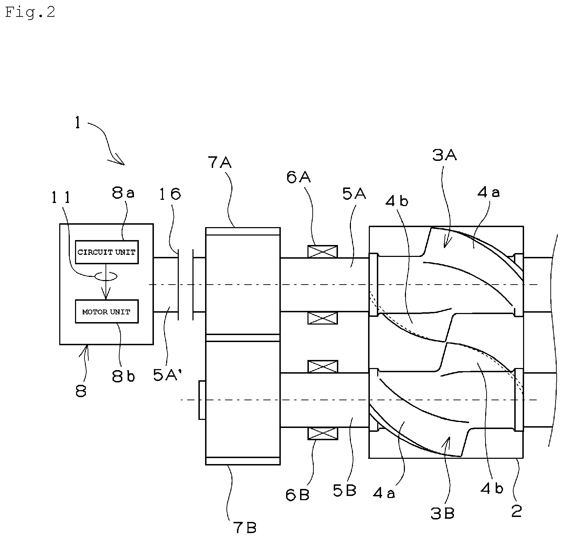

As illustrated in FIG. 1, an internal mixer 1 mainly includes a kneading mechanism including a kneading chamber 2 and an electric motor 8 (see FIG. 2), a pressurizing mechanism including a pressurizing lid 9a that pressurizes kneading materials fed into the kneading chamber, and a controller 12 that controls mixing of the kneading material. The evaluation method and the kneader of the present invention are particularly characterized in that a predetermined kneading parameter is spectrally analyzed. That is, periodicity is found by spectrally analyzing a predetermined kneading parameter which seems to have no periodicity, and a predetermined frequency component (for example, a frequency component of a mechanical rotation period or a synchronization period of rotors) is observed and used to grasp a change in physical properties of the kneading material.

The kneading chamber 2 has an inner peripheral surface shape in which two substantially C-shaped partial circumferential surfaces are connected facing each other, and two rotor chambers 2A and 2B adjacent to and connected with each other are provided in the kneading chamber 2. The inner bottom of the kneading chamber 2 is provided, at its boundary between the inner peripheral surfaces of the rotor chambers 2A and 2B, with a ridge wall portion 2C rising in a chevron shape. Both axial ends of each of the rotor chambers 2A and 2B are closed by a chamber end wall (not illustrated). Note that the cross-sectional shapes of the rotor chambers 2A and 2B are constant in the axial direction.

The internal mixer 1 includes a temperature sensor 10 that detects the temperature in the kneading chamber during kneading. The temperature sensor 10 is disposed such that a detection end 10a protrudes from the upper surface of the ridge wall portion 2C, and can detect the temperature of the kneading material in contact with the detection end 10a. A well-known temperature sensor is used as the temperature sensor 10, and for example, a thermocouple temperature detector that accommodates a thermocouple element in a protective tube and measures temperature is used. As the thermocouple temperature detector, for example, a grounded type in which the thermocouple element tip is welded to the tip of the protective tube and the temperature of the kneading material is sensed on the outer surface of the protective tube, or a non-grounded type in which the thermocouple element is brought into contact with the inner wall of the tip of the protective tube and the temperature of the protective tube is sensed can be used.

Note that the temperature sensor provided in the internal mixer 1 is not limited to the sensor configuration or arrangement illustrated in FIG. 1 as long as the temperature sensor detects the temperature of the kneading material during kneading. The temperature change of the kneading material detected by the temperature sensor will be described later.

As illustrated in FIG. 1, in the rotor chambers 2A, 2B, kneading rotors 3A, 3B that mix the kneading material are rotatably installed at a gap with the inner peripheral surfaces of the rotor chambers 2A, 2B, respectively. The kneading rotors 3A and 3B each include two blades 4a and 4b. Each of the blades 4a and 4b has a cross-sectional shape having a chevron shape from the side of the starting portion toward the side of the ending portion, and has a land portion at the top thereof. The land portion rotates while maintaining a predetermined gap with the inner peripheral surface. As the kneading rotors 3A and 3B rotate, the shape of the kneading space in the rotor chambers 2A and 2B changes. The kneading rotors 3A and 3B have different rotation directions, and are configured such that the blades rotate downward on the side where the rotor chambers 2A and 2B connected with each other.

An opening for feeding kneading materials is provided above the kneading chamber 2. The pressurizing lid 9a is movable up and down by a cylinder device or the like, and the kneading material is fed from the opening in a state where the pressurizing lid 9a is raised. Thereafter, the pressurizing lid 9a is lowered by a rod 9b, and the two kneading rotors 3A and 3B are rotated while pressurizing the kneading material. In this case, the kneading material is mixed by the flow in complex directions including not only the rotation direction of the rotors but also the axial direction by the blades 4a and 4b having a spiral shape.

The kneader according to the present invention is not limited to the configuration of FIG. 1. The internal mixer 1 of FIG. 1 is a type in which the kneading chamber 2 is reversed after kneading to take out the kneading material from the opening, but for example, the mixing and kneading machine (described as kneader here) may be a type in which the kneading material is taken out from the bottom of the kneading chamber after kneading.

FIG. 2 is a schematic plan view of the internal mixer. As illustrated in FIG. 2, the internal mixer 1 includes the kneading chamber 2, the kneading rotors 3A and 3B, bearings 6A and 6B that rotatably support the rotor shafts 5A and 5B, and a pair of gears 7A and 7B. The spiral blades 4a and 4b are formed on the outer peripheries of the kneading rotors 3A and 3B. For example, in the kneading rotor 3A, the blades 4a and 4b have their respective starting portions on both axial ends of the kneading rotor 3A where their circumferential phases differ by 180° from each other, and extend from these starting portions along the outer circumference of the kneading rotor 3A in a spiral direction. The configuration of the blades in the kneading rotor is not limited thereto. In FIG. 2, the lengths of the blades 4a and 4b in the spiral direction are different from each other, and the blade 4a is a long blade and the blade 4b is a short blade. Note that the number of blades is not limited to two, and a configuration having a plurality of blades such as three, four, or six can be adopted. In this case, for example, the position (phase in the circumferential direction) of the starting portion between the blades is appropriately set according to the number of blades.

In the internal mixer 1, the rotor shafts 5A and 5B of the two kneading rotors 3A and 3B are installed in parallel. The rotor shaft 5A is connected to an output shaft 5A' of the electric motor 8 via a coupling 16. Note that the rotor shafts 5A and 5A' may be integrally configured by omitting the coupling 16. On the other hand, the rotor shaft 5B is connected to the rotor shaft 5A via the pair of gears 7A and 7B. The electric motor 8 includes a circuit unit 8a and a motor unit 8b. The circuit unit 8a generates power on the basis of a control signal, and supplies the generated power to the motor unit 8b. The electric motor 8 includes a power sensor 11 that detects power supplied to the motor unit 8b. In the present invention, the electric motor may be an alternating current electric motor driven by an alternating current power supply or a direct current electric motor driven by a direct current power supply.

Note that the electric motor 8 may include a speed reducer, and the rotational force generated from the drive source may be decelerated and output. In addition, the pair of gears 7A and 7B is not limited to gears provided outside the electric motor 8 as illustrated in FIG. 2, and may be gears incorporated in the electric motor 8 or a speed reducer. The configuration of the gear is not limited to the spur gear, and may be a helical gear or the like. Further, in the kneader, each kneading rotor may be connected to the corresponding gear via a coupling.

In the configuration of FIG. 2, the rotor shafts 5A and 5B rotate by driving the electric motor 8, so that the kneading rotors 3A and 3B rotate to perform kneading. In the internal mixer 1 according to the present invention, the pair of gears 7A and 7B is a combination of the numbers of teeth of different integers that are not prime to each other, and the pair of kneading rotors 3A and 3B rotates at different speeds. In FIG. 2, the kneading rotor 3A corresponds to a drive rotor, and the kneading rotor 3B corresponds to a driven rotor. In the present invention, by utilizing a characteristic phenomenon caused by such a combination of the number of teeth, a change in physical properties of the kneading material can be realized, and the end timing can be accurately determined.

In the present invention, the numbers of teeth in the pair of gears are not particularly limited as long as they are different integers that are not prime to each other, but the number of teeth of the gear having a larger number of teeth is preferably 10% to 50% larger than the number of teeth of the other gear. In addition, the number of teeth in the pair of gears preferably has such a relationship that the high-speed rotor (drive rotor) and the low-speed rotor (driven rotor) return to the same phase within 10 rotations of the high-speed rotor.

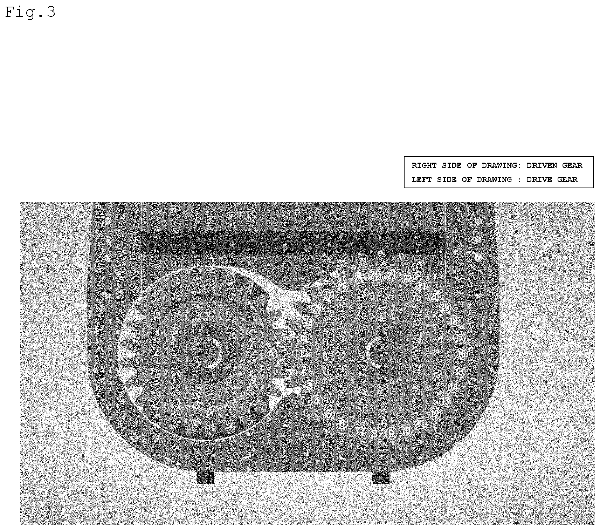

FIG. 3 illustrates, as an example, a pair of gears in which the number of teeth of the drive gear is 25 and the number of teeth of the driven gear is 30. In this case, when the drive rotor connected to the drive gear rotates six times, the drive rotor and the driven rotor return to the same phase. FIG. 3 is a diagram of the pair of rotor shafts as viewed from the gear side, and illustrates a state in which the pair of gears meshes. In FIG. 3, for the sake of convenience, the positions of the valley portions of the driven gear with which the teeth of the drive gear mesh are indicated by circled numbers.

Returning to FIG. 1, the controller 12 mainly includes a microcomputer including a known CPU, ROM, RAM, and the like. The sensors 10 and 11 that are provided in the internal mixer 1 and detect kneading parameters are connected to the controller 12. During the kneading, the kneading parameters are input to the controller 12 every predetermined period (for example, every 0.1 to 1.0 seconds), and continuously detected and stored. The controller 12 also has various calculation functions.

In the present invention, the kneading parameter indicates a kneading state of the kneading material at the time of kneading, and is a parameter that seems to have no periodicity. Specifically, at least one of the temperature of the kneading material, the effective value of the alternating current supplied to the electric motor, the direct current value supplied to the electric motor, the power value consumed by the electric motor, the load ratio of the electric motor, the output torque of the electric motor, the acoustic wave generated from the kneader, and the vibration generated from the kneader can be used.

For example, the temperature of the kneading material is detected by the temperature sensor 10 as illustrated in FIG. 1, and a detection signal thereof is input to the controller 12.

In a case where the electric motor is an alternating current electric motor, the effective value of the alternating current supplied to the electric motor is calculated on the basis of the detection signal of a current sensor. For example, the effective value of the alternating current can be calculated by dividing the maximum value of the instantaneous value by V2. In a case where the electric motor is a direct current electric motor, the direct current value supplied to the electric motor is detected on the basis of the detection signal of the current sensor.

The power value consumed by the electric motor is detected by, for example, the power sensor 11 provided in the electric motor 8 as illustrated in FIG. 2, and a detection signal thereof is input to the controller. For example, in a case where the electric motor is an alternating current electric motor, the power value consumed by the electric motor is an active power P, and is expressed by the following Formula (1).

$$\text{Active power } P = V \cdot I \cdot \cos\theta \quad \dots \quad (1)$$

In the above Formula (1), the effective value of the voltage applied to the electric motor is V, the effective value of the alternating current supplied to the electric motor is I, the phase difference between the voltage and the current is $\theta$, and the power factor is $\cos\theta$.

In a case where the electric motor is a direct current electric motor, the power value consumed by the electric motor is represented by a product of a voltage V applied to the electric motor and a direct current value I supplied to the electric motor.

In addition, the load ratio of the electric motor is expressed by the following Formula (2) on the basis of, for example, the power value consumed by the electric motor described above and the rated value of the electric motor.

$$\text{Load ratio (\%)} = [\text{power value (W) consumed by electric}$$

$$\text{motor/rated value (W) of electric motor}] \times 100$$

The output torque of the electric motor is detected by, for example, a torque sensor provided in the electric motor. The output torque is calculated on the basis of, for example, a power value consumed by the electric motor and a rotation speed or an angular velocity of the electric motor. The acoustic wave generated from the kneader is detected by an acoustic sensor provided in the kneader (for example, in the vicinity of the kneading chamber). The vibration generated from the kneader is detected by a vibration sensor provided in the kneader (for example, in the vicinity of the kneading chamber). A known sensor can be used as each sensor for acquiring the kneading parameter described above. FIG. 1 illustrates a configuration in which the temperature of the kneading material and the power value consumed by the electric motor are acquired as the kneading parameters, but the configuration is not limited thereto.

As illustrated in FIG. 1, the controller 12 includes an analyzer 13 that performs spectrum analysis on the basis of the input kneading parameter, and is configured to be able to evaluate changes in predetermined frequency components on the basis of an analysis result. The controller 12 further includes a determiner 14 that determines the end timing of kneading in the kneader on the basis of the analysis result of the analyzer 13, and a notifier 15 that provides notification of the end timing of kneading when the determiner 14 determines that it is the end timing of kneading. The analyzer 13 may directly perform spectrum analysis on the kneading parameter, or may perform spectrum analysis on a calculated value (for example, a deviation between a moving average value and a current value of the kneading parameter) calculated by processing the kneading parameter. The processing in each unit of the controller 12 is executed at the time of kneading. Hereinafter, processing in the analyzer 13 will be described using a graph.

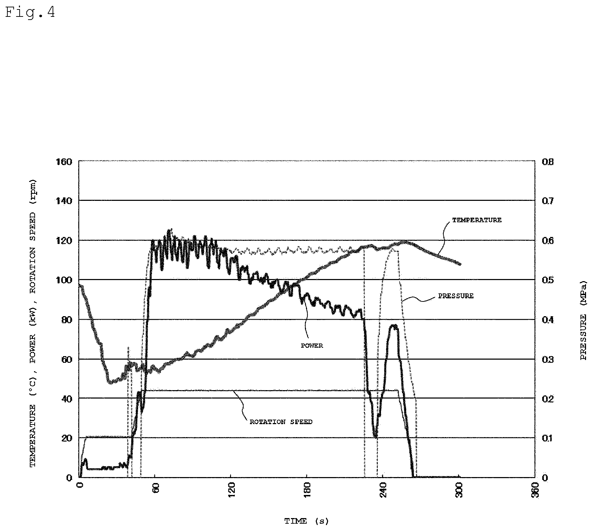

FIG. 4 illustrates temporal variations of various parameters when a rubber compound is kneaded as a kneading material using a tangential internal mixer (see FIG. 3) having a pair of gears in which the number m of teeth of a drive gear is 25 and the number n of teeth of a driven gear is 30. Here, the temperature in the drawing indicates the temperature of the kneading material detected by the temperature sensor, the power in the drawing indicates the power value consumed by the electric motor detected by the power sensor (specifically, the active power of the alternating current electric motor), the rotation speed in the drawing indicates the rotation speed of the drive rotor, and the pressure in the drawing indicates the pressure load by the weight pressure of the pressurizing lid that suppresses the floating of the kneading material from above the kneading chamber. In this test example, various parameters are detected by various sensors every 0.5 seconds.

In the test example of FIG. 4, kneading is controlled by a conventional method, and the end temperature of kneading is set to 120°C. As the kneading starts, driving power is supplied to the motor unit of the electric motor, and the drive rotor rotates. In FIG. 4, kneading is performed at a rotation speed of the drive rotor of 44 rpm (= 0.73 Hz). The rotation speed of the driven rotor is 36.7 rpm (= 0.61 Hz). In this test example, the kneading period is about 260 seconds, and the temperature of the kneading material has reached 120°C. Accordingly, it is determined that it is time to end the kneading, and the electric motor is stopped (that is, the supply of the driving power is stopped). As described above, in the conventional method, the detection value (temperature or the like) detected by the sensor is used as an index of the kneading end timing. However, these indices seem continuous, and it is difficult to grasp the change in physical properties of the kneading material during kneading.

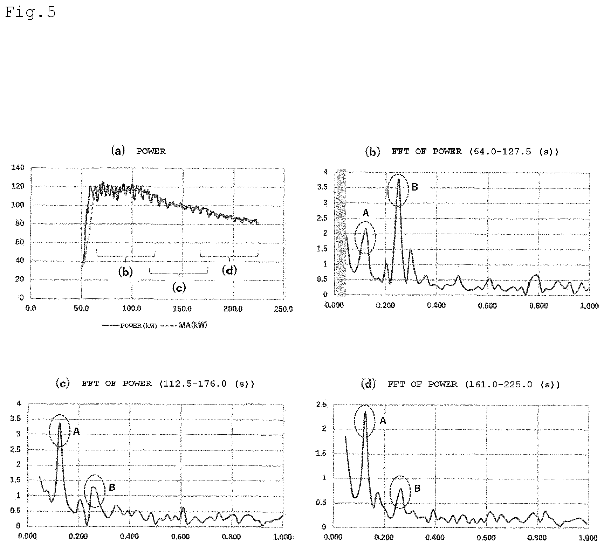

In contrast, in the present invention, periodicity is found by spectrum analysis of a kneading parameter, and a change in physical properties of the kneading material during kneading is grasped by, for example, evaluating changes in predetermined frequency components. FIGS. 5 to 8 described later illustrate results of spectrum analysis performed by the analyzer 13 using the kneading parameters (power value, temperature) illustrated in FIG. 4.

FIG. 5 illustrates a result of direct fast Fourier transform (FFT) of the power value consumed by the electric motor as the spectrum analysis. FIG. 5(a) is a diagram in which only the power value is extracted from the graph of FIG. 4. The graph also shows a moving average line (MA) for 8.18 seconds of the power value. The moving average line is determined on the basis of the rotation speed r of the drive rotor. FIGS. 5(b) to 5(d) illustrate results of fast Fourier transform of power values in certain time periods in FIG. 5(a).

In this test example, the number of teeth in the pair of gears is 25 (= m) and 30 (= n), and there is a greatest common divisor 5 (= k) greater than 1 between 25 and 30. The rotation speed of the drive rotor connected to the gear having 25 teeth is 44 (= r). As illustrated in FIGS. 5(b) to 5(d), as a result of directly spectrally analyzing the power value, a spectrum A was detected around $f = (r \cdot k)/60n = 0.122$ (unit: Hz). A spectrum B was also detected around 0.244 Hz, which was 2 times 0.122 Hz. In the initial stage of kneading, the spectrum B was detected most strongly (see FIG. 5(b)), and the strongest spectrum was shifted to the spectrum A with time (see FIG. 5(c)), and the intensity was attenuated (see FIG. 5(d)).

The spectra detected at $f = (r-k)/60n$ and integer multiples (including multiples of 1) or integer fractions of f are generated by the pair of gear having a combination of the numbers of teeth of different integers that are not prime to each other. The spectra are based on the fact that a predetermined phase repeatedly appears in a rotation phase pattern that changes at any time by the rotation of the pair of rotors, and it can be said that the intensity change of the spectra represents the physical property change of the kneading material in the predetermined phase.

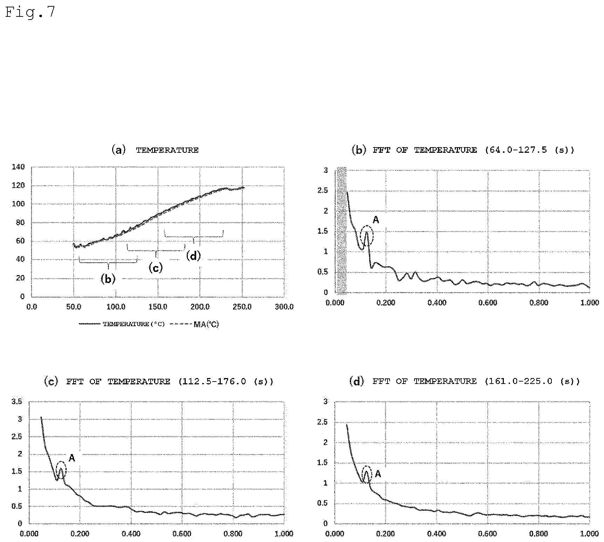

Note that since there are many low-frequency components in the detected value (raw data), the low-frequency components are excluded from the evaluation range in FIGS. 5(b) to 5(d). The same applies to FIGS. 7(b) to 7(d) described later. From such a viewpoint, in a case where the kneading parameter is directly spectrally analyzed, the spectrum to be evaluated is preferably $f = (r-k)/60n$ and integral multiples of f (more preferably 1 to 3 times).

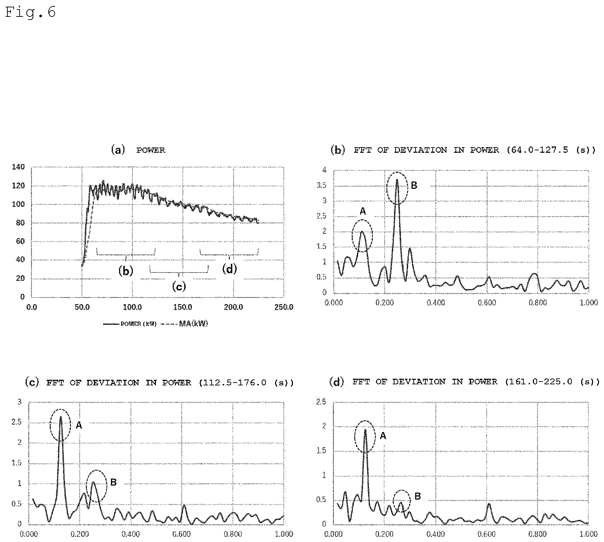

Next, FIG. 6 illustrates a result of processing the power value consumed by the electric motor and then performing fast Fourier transform as the spectrum analysis. In FIG. 6, as the above processing, the deviation of the power value (= power value (current value) - moving average value) was obtained, and the obtained deviation of the power value was subjected to fast Fourier transform. The results are shown in FIGS. 6(b) to 6(d). FIG. 6(a) is the same as FIG. 5(a).

As illustrated in FIGS. 6(b) to 6(d), the spectrum A was detected around 0.122 Hz and the spectrum B was detected around 0.244 Hz as the main spectra. In addition, temporal changes of these spectra showed behaviors similar to those in FIGS. 5(b) to 5(d).

Subsequently, FIG. 7 illustrates a result of direct fast Fourier transform of the temperature of the kneading material as the spectrum analysis. FIG. 7(a) is a diagram in which only the temperature is extracted from the graph of FIG. 4. Note that a moving average line (MA) of the temperature for 8.18 seconds is also illustrated in the drawing. The moving average line is determined on the basis of the rotation speed r of the drive rotor. FIGS. 7(b) to 7(d) illustrate results of fast Fourier transform of the temperature in certain time periods in FIG. 7(a).

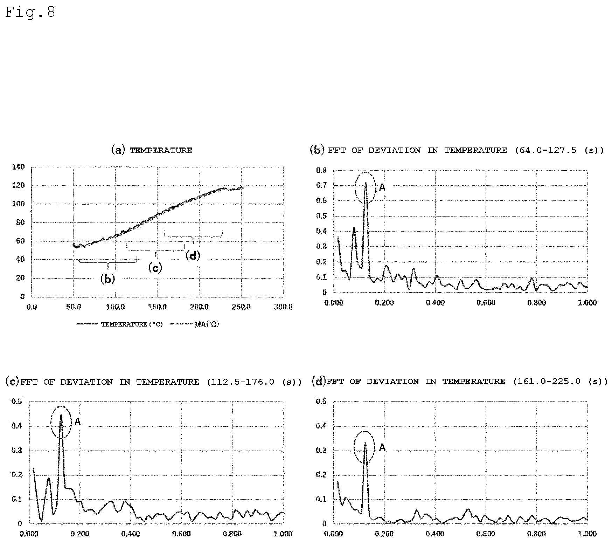

As illustrated in FIGS. 7(b) to 7(d), the spectrum A was detected around 0.122 Hz, but the shape of the spectrum was slightly unclear. On the other hand, as illustrated in FIGS. 8(b) to 8(d), in a case where the fast Fourier transform of the temperature deviation (= temperature (current value) - moving average value) was performed, the spectrum A around 0.122 Hz became clear, and the attenuation of the spectrum A was successfully confirmed.

As illustrated in FIG. 4, the temperature and the power value, which are kneading parameters, change with a trend with a time span and a change amount much larger than the change with fine vertical movement, and it is difficult to find periodicity. On the other hand, as illustrated in FIGS. 5 to 8, periodicity can be found by performing spectrum analysis directly or by processing the temperature or the power value. The physical property change of the kneading material during the kneading can be grasped by evaluating the change in the spectrum of the predetermined frequency component. Thus, the evaluation method and the kneader of the present invention can accurately grasp the end timing of kneading according to the kneading state. As a result, it is considered that excessive kneading and the like can be prevented, energy saving performance is excellent, and variation in kneading characteristics for each batch can be reduced as compared with the conventional method.

FIGS. 5 to 8 illustrate the results obtained by spectrally analyzing the power value consumed by the electric motor and the temperature of the kneading material as the kneading parameters, but the physical property change of the kneading material can be similarly grasped with other kneading parameters. For example, the effective value of the alternating current supplied to the electric motor, the direct current value supplied to the electric motor, the load ratio of the electric motor, and the output torque of the electric motor are parameters closely related to the power value consumed by the electric motor, and similar results are obtained by spectrum analysis.

In FIG. 1, the determiner 14 determines the end timing of the kneading on the basis of, for example, a change in the frequency components of $f = (r \cdot k)/60n$ (unit: Hz) and integer multiples or integer fractions of f. For example, in a case of m = 25, n = 30, k = 5, and r = 45 (min⁻¹), f = 0.125 (Hz) is obtained, and spectra of integer multiples of 0.125, 0.25, 0.375, and 0.5 Hz, and spectra of integer fractions of 0.0625, 0.03166 Hz, and the like are evaluated. For example, the determiner 14 can set an intensity threshold for a spectrum of a predetermined frequency component (for example, spectrum A in FIGS. 5 to 8), and determine that it is the kneading end timing when the intensity of the spectrum falls below the threshold. Alternatively, a threshold of the rate of change in intensity may be set, and when the rate of change in intensity of the spectrum falls below the threshold (that is, when the intensity change of the spectrum slows down), it may be determined that it is the kneading end timing.

The notifier 15 has a function of notification of the end of kneading. The notification means is not particularly limited, and it is possible to adopt one or a combination of means such as displaying the end on a monitor for an operator, notifying the operator of the end by sound or voice, notifying those outside of the end by communication, and notifying the operator of the end by lamp display.

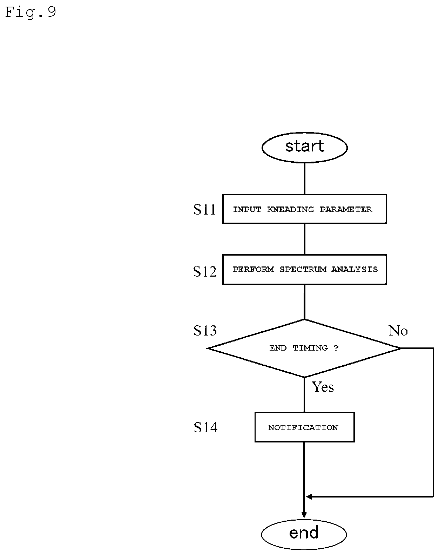

FIG. 9 is a flowchart illustrating a processing procedure at the time of kneading executed by the controller. The processing from the start to the end in FIG. 9 is repeatedly performed at predetermined time intervals.

First, the controller inputs kneading parameters acquired by the various sensors (step S11). Examples of the kneading parameters include a power value consumed by the electric motor and a temperature of the kneading material as described above. In subsequent step S12, the analyzer performs spectrum analysis on the basis of the kneading parameter. In step S12, the kneading parameter may be processed to obtain a calculated value, and the spectrum analysis may be performed using the calculated value. The spectrum analysis method is not particularly limited, but for example, a fast Fourier transform can be used.

In step S13, the determiner determines a kneading end timing. The determination of the end timing is performed using, for example, a predetermined threshold and a spectrum of a predetermined frequency component detected by spectrum analysis.

When it is determined in step S13 that it is not the end timing (step S13: No), the process ends as it is. On the other hand, when it is determined that it is the end timing (step S13: Yes), the supply of the driving power to the motor unit is stopped, and the notifier notifies the operator of the end of the kneading (step S14).

The specific configurations of the evaluation method and the kneader of the present invention are not limited to the configurations in the above drawings, and can be appropriately changed. In the examples illustrated in FIGS. 4 to 8, the case where the rotation speed of the drive rotor is constant has been described, but the present invention can be applied even when the rotation speed (= r) varies. For example, in a case where the rotation speed r of the drive rotor changes, the spectrum analysis may be performed after complementing an input signal. Specifically, by using data sampled at equal intervals, the above processing can be performed using data obtained by linearly interpolating and resampling the original sampling data at intervals of "a/r" ((unit: s), a is a constant (unit: s/min), and r is a rotation speed (unit: min⁻¹)). Note that the data complementing method is not limited to linear interpolation.

As described above, in an internal mixer including tangential rotors, the evaluation method and the kneader of the present invention find periodicity from a continuously changing kneading parameter (value) in which periodicity is not generally recognized, by combining a configuration in which a mechanical rotation period of rotors appears and a spectrum analysis of a predetermined kneading parameter, and realize a change in physical properties of a kneading material by focusing on a change in a predetermined frequency component.

Next, the kneading adjustment method of the present invention will be described below.

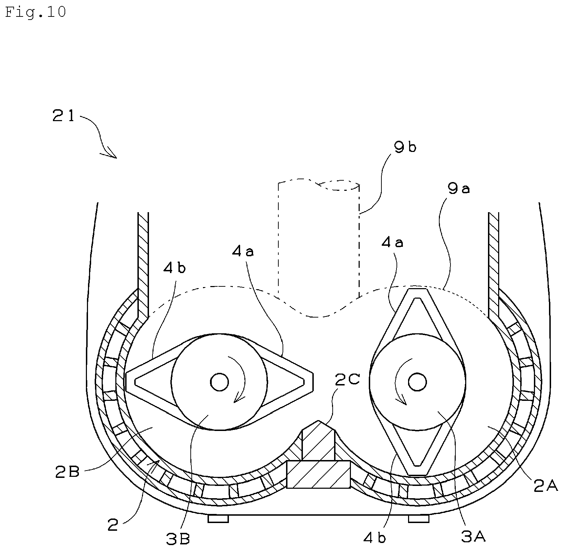

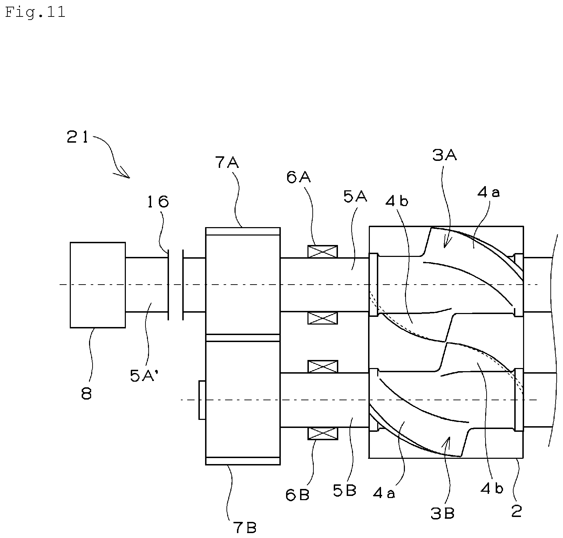

FIG. 10 is a schematic cross-sectional view of a kneading chamber located at a lower end of the kneader used in the kneading adjustment method of the present invention, and FIG. 11 is a schematic plan view of the kneader. In FIGS. 10 and 11, the same components as those of the kneader described with reference to FIGS. 1 and 2 are denoted by the same reference numerals, and detailed description thereof will be omitted as appropriate.

As illustrated in FIGS. 10 and 11, the kneader 21 includes a pair of kneading rotors 3A and 3B connected by a pair of gears 7A and 7B (see FIG. 11) and rotating at different speeds. In the configuration of FIG. 11, the rotor shafts 5A and 5B rotate by driving of the electric motor 8 as a drive means, so that the kneading rotors 3A and 3B rotate to perform kneading. In the internal mixer 21 used in the kneading adjustment method of the present invention, the pair of gears 7A and 7B has different numbers of teeth, and the pair of kneading rotors 3A and 3B rotates at different speeds.

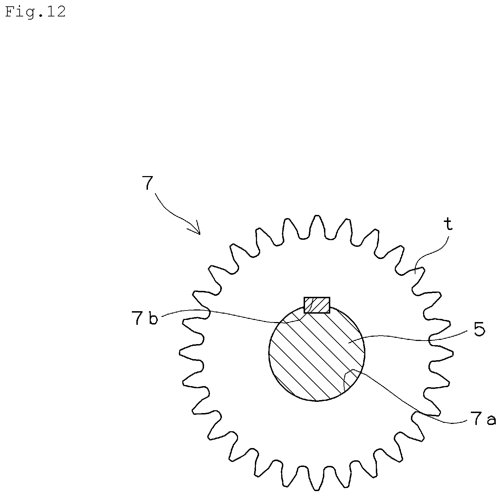

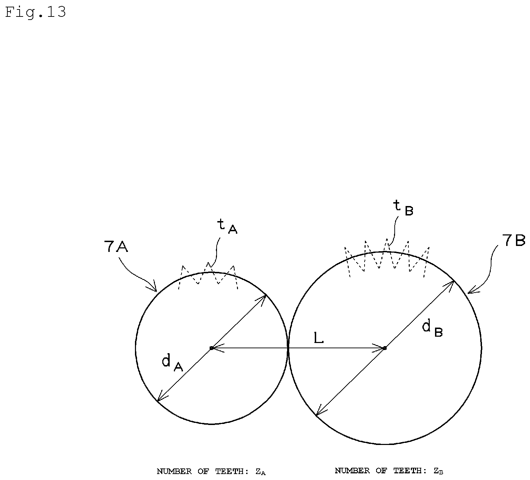

Next, the gear will be described with reference to FIGS. 12 and 13. FIG. 12 is a schematic plan view of an example of the gear. As illustrated in FIG. 12, the gear 7 has a plurality of teeth t disposed along the circumferential direction of the gear body. These teeth t are provided at equal intervals in the circumferential direction. An attachment hole 7a for the rotor shaft 5 is formed at the center of the gear 7, and a keyway 7b is formed in a part of the gear 7 in the circumferential direction.

FIG. 13 schematically illustrates a dimensional relationship between the pair of gears. An example of setting the number of teeth in the pair of gears will be described below with reference to FIG. 13.

In the pair of gears, the sizes of the teeth need to be the same in order for the gears to function properly. When representing tooth size, a value called a module m is used. The module m (mm) is defined as a value obtained by dividing a pitch circle diameter d (mm) by the number of teeth Z, and is expressed by the following Formula (1) in the case of the pair of gears 7A and 7B illustrated in FIG. 13. Note that the module m does not need to be an integer.

$$\text{Module } m = d_A/Z_A = d_B/Z_B \ \ldots \ (1)$$

The center distance between the pair of gears 7A and 7B is the shortest distance between the shafts of the pair of gears, and is expressed by the following Formula (2).

$$\text{Center distance } L = (d_A + d_B)/2 \ \ldots \ (2)$$

From the above Formulae (1) and (2), the following Formula (3) is derived as a formula representing the sum of the number of teeth in the pair of gears 7A and 7B.

$$Z_A + Z_B = (2 \times L)/m \ \ldots \ (3)$$

From the above Formula (3), the sum of the number of teeth in the pair of gears 7A and 7B is a value obtained by dividing a doubled value of the center distance L by the module m. In this manner, by setting the center distance L and the module m, the sum of the number of teeth in the pair of gears is calculated, and by distributing the number of teeth from the sum, each number of teeth can be set.

Conventionally, the number of teeth of a pair of gears is set such that a speed difference of 15% to 25% occurs between the pair of gears. For example, in the case of the module 14 with the center distance of 385 mm, $Z_A + Z_B = 55$ is obtained from (3) above. Using this value, Setting 1 ($Z_A = 24$, $Z_B = 31$), Setting 2 ($Z_A = 25$, $Z_B = 30$), Setting 3 ($Z_A = 26$, $Z_B = 29$), and the like can be considered as the setting of each number of teeth. Among these Settings 1 to 3, Setting 1 and Setting 3 can be said to be a combination of different numbers of teeth that are prime to each other, and Setting 2 can be said to be a combination of different numbers of teeth that are not prime to each other.

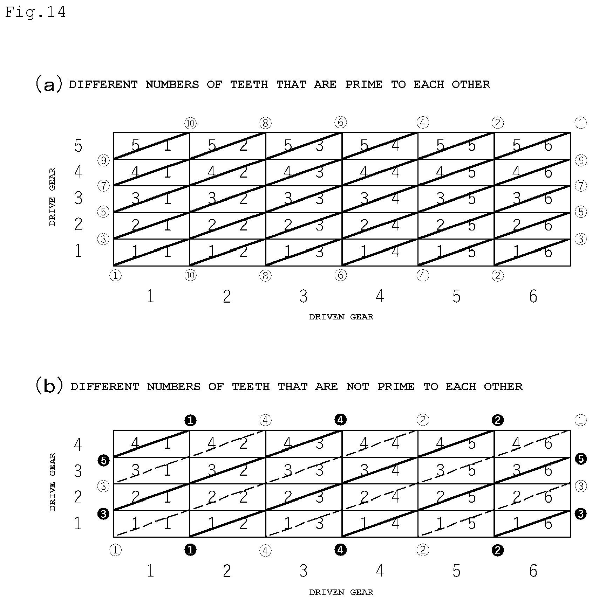

Here, a meshing state of the drive gear and the driven gear having different numbers of teeth will be described with reference to FIG. 14. First, FIG. 14(a) illustrates a case where the number of teeth of the drive gear is 5 and the number of teeth of the driven gear is 6 as a combination of different numbers of teeth which are prime to each other. In this drawing, each of the teeth of the drive gear and the driven gear is numbered. Each block includes numbers and this indicates a state in which the tooth of the number of the drive gear and tooth of the number of the driven gear mesh with each other. For example, in FIG. 14(a), a state in which the second tooth of the drive gear and the first tooth of the driven gear mesh with each other is represented by a block "2-1". Note that the circled number indicates that the block is connected to the same circled number.

In FIG. 14(a), for example, when a state in which the first tooth of the drive gear and the first tooth of the driven gear mesh with each other (block of "1-1") is set as an initial state and the drive gear is rotated from the initial state, the meshing state of the drive gear and the driven gear sequentially changes to "2-2", "3-3", "4-4", 5"-5", "1-6", "2-1", "3-2", "4-3", "5-4", "1-5" ... "4-5", "5-6", and "1-1". In this case, the meshing state returns to the initial meshing state ((block of "1-1")) through $5 \times 6 = 30$ meshing states of the teeth. As described above, in a case where a pair of gears have different numbers of teeth that are prime to each other, the combination pattern (mesh pattern) of the meshes is the same regardless of the initial meshing state of the pair of gears. In this case, the number of trails of oblique lines (for example, the trail from Circled number 1 to Circled number 1) corresponds to the number of meshing patterns, and is 1 in FIG. 14(a).

On the other hand, FIG. 14(b) illustrates a case where the number of teeth of the drive gear is 4 and the number of teeth of the driven gear is 6 as a combination of different numbers of teeth that are not prime to each other. For example, when the drive gear is rotated from a state (block of "1-1") in which the first tooth of the drive gear and the first tooth of the driven gear mesh with each other as an initial state, the meshing state of the drive gear and the driven gear sequentially changes to "2-2", "3-3", "4-4", "1-5", "2-6", "3-1", "4-2", "1-3", "2-4", "3-5", "4-6", and "1-1". Further, when the drive gear is rotated from a state (block of "1-2") in which the first tooth of the drive gear and the second tooth of the driven gear mesh with each other as an initial state, the meshing state of the drive gear and the driven gear sequentially changes to "2-3", "3-4", "4-5", "1-6", "2-1", "3-2", "4-3", "1-4", "2-5", "3-6", "4-1", and "1-2". In this case, the number of teeth of the drive gear and the driven gear has the greatest common divisor 2, and returns to the initial meshing state through the meshing state of the teeth of $4 \times 6 \div 2 = 12$. Then, in a case where the initial meshing state is set to the first tooth of the drive gear and the first tooth of the driven gear, and in a case where the initial meshing state is set to the first tooth of the drive gear and the second tooth of the driven gear, the meshing states of the respective gears do not intersect with each other. That is, as illustrated in FIG. 14(b), the trails of oblique lines are different from each other. As described above, in a case where the pair of gears has different numbers of teeth that are not prime to each other, the meshing pattern can be selected according to the initial meshing state of the pair of gears. The meshing patterns (the number of trails of oblique lines) in FIG. 14(b) are 2.

Focusing on such a phenomenon, the inventor of the present invention has found that the rotation phase of the kneading rotors can be adjusted by setting the numbers of teeth in the pair of gears to the numbers of teeth of different integers that are not prime to each other from a plurality of combinations of the numbers of teeth and then selecting a specific meshing pattern from a plurality of meshing patterns of the gears, thereby achieving the present invention. In this way, by adjusting the rotation phase of the kneading rotors, the shape of the kneading space can be changed without changing the shape of the tangential rotors, and desired kneading characteristics can be obtained.

In general, in the case of a pair of gears having different numbers of teeth m and n that are not prime to each other, when the greatest common divisor is k, m and n can be expressed as $m = k \times m0$ and $n = k \times n0$. In this case, there are k meshing patterns of the gears, and in each meshing pattern, the gears return to the initial meshing state through $(k \times m0 \times n0)$ meshing states. For example, in a case of m = 25 and n = 30, there are five meshing patterns that correspond to the greatest common divisor of m and n, and each meshing pattern returns to the initial meshing state through 150 meshing states.

In the kneading adjustment method of the present invention, the number of teeth in a pair of gears is not limited as long as they are different integers that are not prime to each other, but the number of teeth of the gear having a larger number of teeth is preferably 10% to 50% larger than the number of teeth of the other gear. The above-described FIG. 3 illustrates, as an example, a pair of gears in which the number of teeth of the drive gear is 25 and the number of teeth of the driven gear is 30.

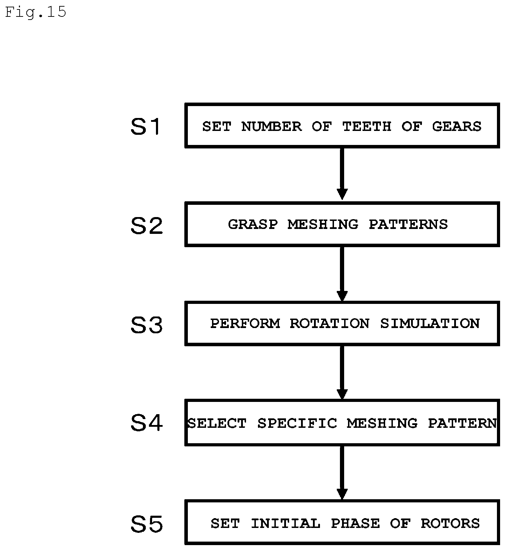

FIG. 15 illustrates an example of the procedure of the kneading adjustment method of the present invention. Each step will be described below.

(Step S1)

In this step, the number of teeth in the pair of gears is set to different integers that are not prime to each other. For example, the number of teeth is set on the basis of the center distance between the pair of gears and the module, as described above.

(Step S2)

In this step, the meshing patterns of the pair of gears each having the set number of teeth are grasped. This meshing pattern will be described with reference to FIG. 3. In the configuration of FIG. 3, the numbers of teeth in the pair of gears have a relationship of drive gear : driven gear = 25 : 30. Therefore, the driven gear makes five rotations while the drive gear makes six rotations. For example, assuming the state of FIG. 3 as the initial meshing state and a tooth "A" corresponding to the keyway of the drive gear as the reference position, the position of the valley portion of the driven gear with which the tooth "A" meshes is "1" in the initial state →"6" at the time of one rotation → "11" at the time of two rotations →"16" at the time of three rotations → "21" at the time of four rotations →"26" at the time of five rotations → "1" at the time of six rotations according to the number of rotations of the drive gear, and returns to the initial meshing state at six rotations. That is, for the tooth "A" of the drive gear, a combination of "1", "6", "11", "16", "21", and "26" constitutes one meshing pattern.

Similarly, when a state in which the tooth "A" of the drive gear meshes with the valley portion "2" of the driven gear is an initial meshing state, the position of the valley portion of the driven gear with which the tooth "A" meshes is "2" in the initial state → "1" at the time of one rotation → "12" at the time of two rotations → "17" at the time of three rotations → "22" at the time of four rotations → "27" at the time of five rotations →"2" at the time of six rotations according to the number of rotations of the drive gear. That is, another meshing pattern is configured by a combination of "2", "7", "12", "17", "22", and "27".

In this way, in the configuration illustrated in FIG. 3, there are the following five meshing patterns. That is, there are meshing patterns according to the numerical value of the greatest common divisor of the number of teeth of the drive gear and the number of teeth of the driven gear. Meshing pattern 1: Valley portions 1, 6, 11, 16, 21, and 26 Meshing pattern 2: Valley portions 2, 7, 12, 17, 22, and 27 Meshing pattern 3: Valley portions 3, 8, 13, 18, 23, and 28 Meshing pattern 4: Valley portions 4, 9, 14, 19, 24, and 29 Meshing pattern 5: Valley portions 5, 10, 15, 20, 25, and 30

As illustrated in FIG. 14, the teeth of the drive gear (25 teeth) and the driven gear (30 teeth) may be numbered to indicate the meshing state in a matrix. Also from the drawing, it can be seen that there are five meshing patterns, which correspond to the greatest common divisor of the number of teeth, in the configuration of the drive gear with 25 teeth and the driven gear with 30 teeth.

In step S2, such a meshing pattern is grasped.

(Step S3)

In this step, a simulation in the case of rotating with each meshing pattern is performed. The simulation may be performed using a computer on which predetermined software is installed or may be performed using an actual machine.

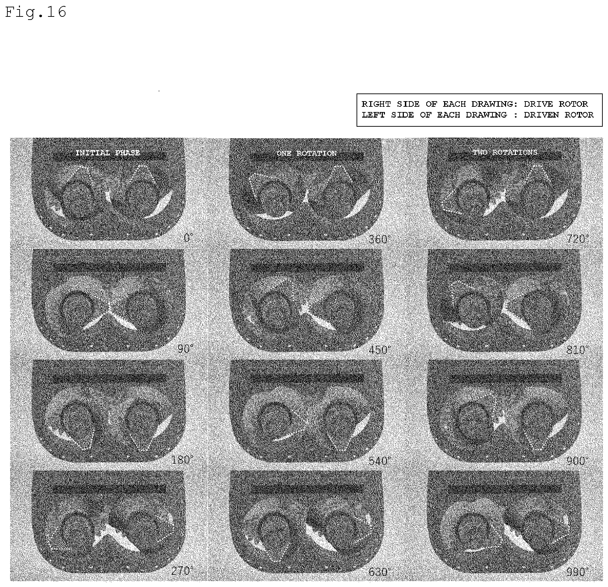

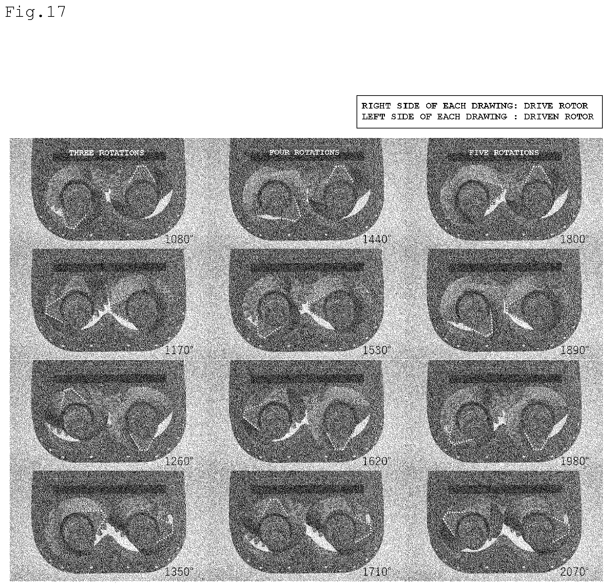

FIGS. 16 and 17 illustrate a change in the phase of the rotors when the gears are rotated in a certain meshing pattern. FIGS. 16 and 17 are side views of the pair of rotor shafts, and illustrate the phases of the kneading rotors when the reference position (for example, the tooth "A" in FIG. 3) of the drive gear rotates by every 90° from the initial meshing state. In FIGS. 16 and 17, the outer edge of the blades on the front side in the drawings of the kneading rotors is indicated by a white dotted line. FIG. 16 illustrates the phases of the kneading rotors when the drive gear rotates from 0° to 990°, and FIG. 17 illustrates the phases of the kneading rotors when the drive gear rotates from 1080° to 2070°.

Here, the initial phase indicates the phase of the pair of kneading rotors corresponding to the initial meshing state of the pair of gears. In FIG. 16, in the initial phase, the land portions of the blades of the drive rotor and the driven rotor face substantially upward. Then, the drive rotor and the driven rotor rotate so that the land portions of the blades face each other (90° view), and further rotate downward (180° view). In one rotation (360° view), the drive rotor returns to the initial phase state, whereas the driven rotor is shifted by a predetermined angle (60° to the upstream side in the rotation direction) from the initial phase state. Note that this one rotation corresponds to, in FIG. 3 for example, a state in which the tooth "A" and the valley portion "6" mesh with each other. Thereafter, every time the drive rotor makes a rotation, as two rotations and three rotations, the shift from the initial phase of the driven rotor becomes larger, and finally returns to the initial phase state at the time of six rotations.

As can be seen from FIGS. 16 and 17, each phase of the pair of kneading rotors does not have the same phase in one cycle from a certain phase to the next return to the original phase, and the phase changes at any time. In the present invention, a combination of phases that can be taken in one cycle of the pair of kneading rotors is referred to as a rotation phase pattern.

In FIGS. 16 and 17, the rotation phase pattern corresponding to a certain meshing pattern is illustrated, but the rotation phase pattern exists for each meshing pattern. That is, in a case where the meshing patterns are five patterns, there are also five rotation phase patterns. For example, in step S3, a rotation phase pattern for each meshing pattern is simulated. The same phase does not exist between the rotation phase patterns.

(Step S4)

In this step, a specific meshing pattern is selected on the basis of the result of the simulation in step S3. For example, selection is made on the basis of a phase parameter obtained for each rotation phase pattern. Examples of the phase parameter include the closest approach distance between the blades of the pair of kneading rotors.

The closest approach distance is the distance at which the blades of the pair of kneading rotors come closest to each other. Specifically, the closest approach distance is the distance between the circumferential center position of the land portion of one blade and the circumferential center position of the land potion of the other blade in the two blades in the relationship of being next to each other. For example, among the phases of the rotation phase pattern of every 90° illustrated in FIGS. 16 and 17, the phase of 90° (see FIG. 16) corresponds to the phase in which the blades come closest to each other, and the distance between the blades in this phase can be used as the closest approach distance.

For example, in step S4, the closest approach distance is obtained for each rotation phase pattern, a desired rotation phase pattern is selected on the basis of these closest approach distances, and a specific meshing pattern is selected. As a result, the distance when the blades of the high-speed rotor and the low-speed rotor come closest to each other can be adjusted, and the kneadability can be changed. Note that the determination using the closest approach distance may also include the positional relationship between both the blades and the ridge wall portion (such as the distance between each blade and the ridge wall portion).

It is considered that the smaller the value of the closest approach distance is, the larger the driving torque at the time of kneading becomes. Therefore, by selecting the rotation phase pattern having the largest closest approach distance, it is possible to prevent an excessive load from being applied to the kneader at the time of kneading. On the other hand, depending on the type, initial viscosity, viscosity characteristics, and the like of kneading material, a large shearing force may be required, and at that time, it is also considered to select a rotation phase pattern having a small closest approach distance. Therefore, the selection criteria (the degree of the closest approach distance, and the like) may be changed depending on, for example, the viscosity characteristics of the kneading material.

As the phase parameter, an average torque, a maximum torque, or the like of the rotation phase pattern can also be used. These can be estimated, for example, on the basis of a computer flow analysis simulation.

(Step S5)

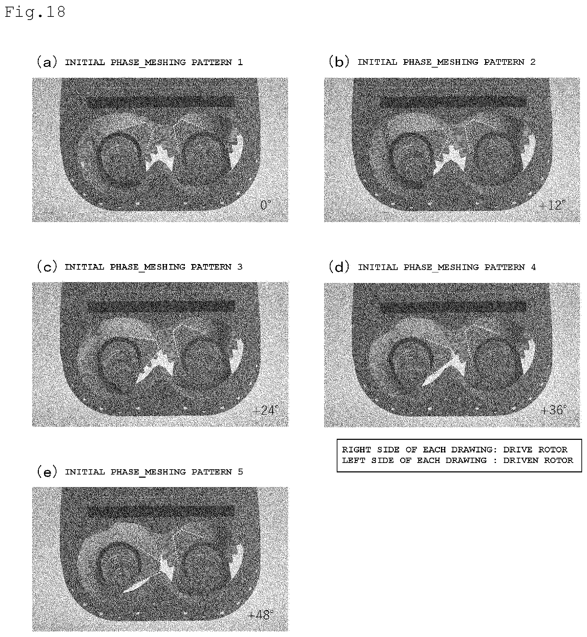

In this step, the initial phase of the kneading rotors is set by meshing the gears with the specific meshing pattern selected in step S4. FIG. 18 illustrates an initial phase for each meshing pattern.

For example, FIG. 18(a) illustrates an initial phase of the meshing pattern 1 in FIG. 3. Using the initial phase of pattern 1 as a reference, the initial phase of the meshing pattern 2 is a state in which the driven rotor is shifted by 12° to the downstream side in the rotation direction with respect to the meshing pattern 1. The initial phases of the meshing patterns 3 to 5 are each shifted by further 12°. For example, when the meshing pattern 1 is selected in step S4, the initial phase of the kneading rotors is set as illustrated in FIG. 18(a).

In the case of the gear configuration of FIG. 3, strictly speaking, there are 150 meshing states in each meshing pattern, and accordingly, there are 150 initial phases for each rotation phase pattern of the kneading rotors. However, these initial phases are the same as seen in the rotation phase pattern, and a certain initial phase may be set from among these.

As described above, conventionally, the number of teeth in the pair of gears is set to different numbers such that the speed difference is simply about 20%. In contrast, in the present invention, the number of teeth in the pair of gears is set to different numbers that are not prime to each other, and then a specific meshing pattern is selected from different meshing patterns generated by the setting, and the initial phase of the kneading rotors is set, whereby the shape of the kneading space can be changed. As a result, kneadability can be affected.

INDUSTRIAL APPLICABILITY

The method for evaluating a kneading state and the kneader according to the present invention are capable of realizing a change in physical properties of a kneading material using various kneading parameters in an internal mixer including tangential rotors, and the kneading adjustment method according to the present invention can obtain desired kneading characteristics, and thus can be widely used in kneading of rubber, plastic, ceramics, and the like. By adjusting the two kneading rotors to have a specific phase by the kneading adjustment method, the characteristics of the kneader can be changed to adjust the performance such as productivity and dispersibility according to the kneading material.

REFERENCE SIGNS LIST

| | |
|---|---|
| 1 | Internal mixer |
| 2 | Kneading chamber |
| 2A, 2B | Rotor chamber |
| 2C | Ridge wall portion |
| 3A, 3B | Kneading rotor |
| 4a, 4b | Blade |
| 5A, 5B | Rotor shaft |
| 6A, 6B | Bearing |
| 7A, 7B | Gear |
| 7a | Attachment hole |
| 7b | Keyway |
| 8 | Electric motor (drive means) |
| 8a | Circuit unit |
| 8b | Motor unit |
| 9a | Pressurizing lid |
| 9b | Rod |
| 10 | Temperature sensor |
| 10a | Detection end |
| 11 | Power sensor |
| 12 | Controller |
| 13 | Analyzer |
| 14 | Determiner |
| 15 | Notifier |
| 16 | Coupling |
| 21 | Internal mixer |

**Claims**

1.  A method for evaluating a kneading state in a kneader including a pair of tangential rotors connected by a pair of gears and rotated at different speeds by driving of an electric motor, wherein

    the gears have numbers of teeth of different integers that are not prime to each other,
    the evaluation method is a method for performing spectrum analysis on a basis of a kneading parameter detected at a time of kneading by a sensor included in the kneader, and evaluating a change in a predetermined frequency component, and
    the kneading parameter is at least any one selected from a temperature of a kneading material, an effective value of an alternating current supplied to the electric motor, a direct current value supplied to the electric motor, a power value consumed by the electric motor, a load ratio of the electric motor, an output torque of the electric motor, an acoustic wave generated from the kneader, and vibration generated from the kneader.

2.  The method for evaluating a kneading state according to claim 1, wherein in a case where the numbers of teeth in the pair of gears are m and n (m < n), the number of teeth m and the number of teeth n have a greatest common divisor k larger than 1, and a rotation speed of a rotor connected to a gear having the number of teeth m is r (unit: $min^{-1}$), spectrum analysis is performed on a basis of the kneading parameter, and changes in the frequency component of $f = (r-k)/60n$ (unit: Hz) and integer multiples or integer fractions of f are evaluated.

3.  The method for evaluating a kneading state according to claim 1, the evaluation method being a method of processing and spectrally analyzing the kneading parameter, the method including spectrally analyzing a deviation between a moving average value and a current value of the kneading parameter.

4.  The method for evaluating a kneading state according to claim 1, wherein the kneader is a kneader that kneads a non-Newtonian fluid.

5.  A kneader comprising a pair of tangential rotors connected by a pair of gears and rotated at different speeds by driving of an electric motor, wherein

    the gears have numbers of teeth of different integers that are not prime to each other,
    the kneader further comprises an analyzer that performs spectrum analysis on a basis of a kneading parameter detected at a time of kneading by a sensor included in the kneader, and
    the kneading parameter is at least any one selected from a temperature of a kneading material, an effective value of an alternating current supplied to the electric motor, a direct current value supplied to the electric motor, a power value consumed by the electric motor, a load ratio of the electric motor, an output torque of the electric motor, an acoustic wave generated from the kneader, and vibration generated from the kneader.

6.  The kneader according to claim 5, further comprising a determiner that determines an end timing of kneading in the kneader on a basis of a change in a predetermined frequency component obtained by the analyzer.

7.  A kneading adjustment method in a kneader including a pair of tangential rotors that are connected by a pair of gears and rotated at different speeds,

    the kneading adjustment method comprising: setting numbers of teeth of the gears to a combination of the numbers of teeth of different integers that are not prime to each other among a plurality of combinations of the numbers of teeth; thereafter selecting a specific meshing pattern from among a plurality of meshing patterns of the gears; and meshing the gears with the specific meshing pattern to set an initial phase of the tangential rotors, wherein
    the specific meshing pattern is selected on a basis of rotation phase patterns of the tangential rotors derived from a state where the gears are meshed by the plurality of meshing patterns.

8.  The kneading adjustment method according to claim 7, wherein the tangential rotors each include a plurality of blades.

9.  The kneading adjustment method according to claim 8, wherein the specific meshing pattern is selected on a basis of a closest approach distance between the blades of the tangential rotors obtained from the rotation phase patterns.

10. The kneading adjustment method according to claim 7, wherein in the gears, the number of teeth of a gear having a larger number of teeth is larger than the number of teeth of another gear by 10% to 50%.

Fig.1

Fig.2

CIRCUIT UNIT

MOTOR UNIT

y

Fig.3

RIGHT SIDE OF DRAWING: DRIVEN GEAR
LEFT SIDE OF DRAWING : DRIVE GEAR

Fig.4

Fig.5

(a) POWER

(b) FFT OF POWER (64.0-127.5 (s))

(c) FFT OF POWER (112.5-176.0 (s))

(d) FFT OF POWER (161.0-225.0 (s))

Fig.6

(a) POWER

(b) FFT OF DEVIATION IN POWER (64.0-127.5 (s))

(c) FFT OF DEVIATION IN POWER (112.5-176.0 (s))

(d) FFT OF DEVIATION IN POWER (161.0-225.0 (s))

Fig.7

(a) TEMPERATURE

(b) FFT OF TEMPERATURE (64.0-127.5 (s))

(c) FFT OF TEMPERATURE (112.5-176.0 (s))

(d) FFT OF TEMPERATURE (161.0-225.0 (s))

Fig.8

(a) TEMPERATURE

(b) FFT OF DEVIATION IN TEMPERATURE (64.0-127.5 (s))

(c) FFT OF DEVIATION IN TEMPERATURE (112.5-176.0 (s))

(d) FFT OF DEVIATION IN TEMPERATURE (161.0-225.0 (s))

Fig.9

start

S11 INPUT KNEADING PARAMETER

S12 PERFORM SPECTRUM ANALYSIS

S13 END TIMING ?  No

Yes

S14 NOTIFICATION

end

Fig.10

Fig.11

Fig.12

Fig.13

NUMBER OF TEETH: $Z_A$          NUMBER OF TEETH: $Z_B$

Fig.14

(a) DIFFERENT NUMBERS OF TEETH THAT ARE PRIME TO EACH OTHER

(b) DIFFERENT NUMBERS OF TEETH THAT ARE NOT PRIME TO EACH OTHER

Fig.15

S1 | SET NUMBER OF TEETH OF GEARS

S2 | GRASP MESHING PATTERNS

S3 | PERFORM ROTATION SIMULATION

S4 | SELECT SPECIFIC MESHING PATTERN

S5 | SET INITIAL PHASE OF ROTORS

Fig.16

Fig.17

Fig.18

(a) INITIAL PHASE_MESHING PATTERN 1

(b) INITIAL PHASE_MESHING PATTERN 2

(c) INITIAL PHASE_MESHING PATTERN 3

(d) INITIAL PHASE_MESHING PATTERN 4

RIGHT SIDE OF EACH DRAWING: DRIVE ROTOR
LEFT SIDE OF EACH DRAWING : DRIVEN ROTOR

(e) INITIAL PHASE_MESHING PATTERN 5

Fig.19

<div style="text-align:center">**INTERNATIONAL SEARCH REPORT**</div>

| International application No. |
| --- |
| **PCT/JP2023/012990** |

**A.  CLASSIFICATION OF SUBJECT MATTER**

*B29B 7/18*(2006.01)i; *B29B 7/20*(2006.01)i; *B29B 7/28*(2006.01)i; *B01F 27/1144*(2022.01)i; *B01F 27/703*(2022.01)i; *B01F 27/721*(2022.01)i; *B01F 35/212*(2022.01)i; *B01F 35/213*(2022.01)i; *B01F 35/214*(2022.01)i; *B01F 35/222*(2022.01)i; *B01F 35/33*(2022.01)i
FI:  B01F35/212; B01F35/214; B01F35/33; B01F35/222; B29B7/20; B01F27/703; B01F35/213; B01F27/1144; B01F27/721; B29B7/18; B29B7/28

According to International Patent Classification (IPC) or to both national classification and IPC

**B.  FIELDS SEARCHED**

Minimum documentation searched (classification system followed by classification symbols)

B29B7/00-7/94; B01F27/00-27/96; B01F35/00-35/95; G01N29/00-29/52; G01N25/00-25/72

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| Y | JP 7-016834 A (KOBE STEEL, LTD.) 20 January 1995 (1995-01-20) | 1-6 |
|   | paragraphs [0001]-[0004], [0010], [0022]-[0024], [0045]-[0049] | |
| A | | 7-10 |
| Y | JP 2016-109674 A (SHINAGAWA KOGYOSHO KK) 20 June 2016 (2016-06-20) | 1-6 |
|   | claims, paragraphs [0001], [0010]-[0013], [0041]-[0046], [0144]-[0146] | |
| A | | 7-10 |
| Y | JP 2003-177115 A (PACIFIC SYSTEMS CORP.) 27 June 2003 (2003-06-27) | 1-6 |
|   | claims, paragraph [0005] | |
| A | | 7-10 |
| Y | JP 6-154982 A (NIPPON STEEL CORP.) 03 June 1994 (1994-06-03) | 1-6 |
|   | claims, paragraphs [0001], [0021], [0022] | |
| A | | 7-10 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 May 2023** | **13 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/012990**

**C.    DOCUMENTS CONSIDERED TO BE RELEVANT**

| Category* | Citation of document, with indication, where appropriate, of the relevant passages | Relevant to claim No. |
|---|---|---|
| Y | JP 2018-202762 A (NIPPON SPINDLE MFG. CO., LTD.) 27 December 2018 (2018-12-27) claims, paragraphs [0011], [0026], [0031] | 6 |
| A | | 7-10 |
| A | WO 2021/033390 A1 (PANASONIC INTELLECTUAL PROPERTY MANAGEMENT CO., LTD.) 25 February 2021 (2021-02-25) claims | 1-10 |

**INTERNATIONAL SEARCH REPORT**
Information on patent family members

International application No.

**PCT/JP2023/012990**

| Patent document cited in search report | | | Publication date (day/month/year) | Patent family member(s) | | | Publication date (day/month/year) |
|---|---|---|---|---|---|---|---|
| JP | 7-016834 | A | 20 January 1995 | US 5460445 A column 1, lines 5-51, column 2, lines 37-44, column 5, lines 24-65, column 9, line 41 to column 10, line 47 | | | |
| JP | 2016-109674 | A | 20 June 2016 | (Family: none) | | | |
| JP | 2003-177115 | A | 27 June 2003 | (Family: none) | | | |
| JP | 6-154982 | A | 03 June 1994 | (Family: none) | | | |
| JP | 2018-202762 | A | 27 December 2018 | CN | 108995069 | A | |
| WO | 2021/033390 | A1 | 25 February 2021 | CN | 113825561 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09313916 A

- WO 2021033390 A